# EUROPÄISCHE PATENTSCHRIFT

(11) **EP 3 718 895 B1**
(45) Veröffentlichungstag und Bekanntmachung des Hinweises auf die Patenterteilung: **27.12.2023**
(21) Anmeldenummer: 20167563.4
(22) Anmeldetag: 01.04.2020
(51) Int. Cl.: B64D 11/06, B60N 2/64, B60N 2/803, B60N 2/42, B60N 2/68, B60N 2/427

(54) **FLUGZEUGSITZVORRICHTUNG**
AIRCRAFT SEAT DEVICE
DISPOSITIF DE SIÈGE D'AVION

(30) Priorität: 01.04.2019 DE 102019108493
(43) Veröffentlichungstag der Anmeldung: 07.10.2020
(73) Patentinhaber: Recaro Aircraft Seating GmbH & Co. KG, 74523 Schwäbisch Hall (DE)
(72) Erfinder: Drenzeck, Thomas, 74545 Michelfeld (DE)
(74) Vertreter: Daub, Thomas

(56) Entgegenhaltungen:
- WO-A1-2017/040241
- WO-A1-2017/155566
- WO-A1-2018/009201
- WO-A2-2015/191709
- CN-A- 107 826 136

## Beschreibung

### Stand der Technik

Die Erfindung betrifft eine Flugzeugsitzvorrichtung.

Es ist bereits eine Flugzeugsitzvorrichtung mit einer Rückenlehneneinheit, die einen Kopfbereich mit zumindest einer Sandwicheinheit umfasst, die zumindest ein Trägerelement und in Richtung einer Rückseite der Rückenlehneneinheit zumindest ein dem Trägerelement nachgeordnetes Hartschaumelement aufweist, das als ein Aufpralldämpfungselement ausgebildet ist, vorgeschlagen worden.

Die Druckschrift WO 2015/191709 A2 offenbart eine Flugzeugsitzvorrichtung, mit einer Rückenlehneneinheit, die einen Kopfbereich umfasst, in dem eine Rückenlehnenschale und in Richtung einer Rückseite der Rückenlehneneinheit ein der Rückenlehnenschale nachgeordnetes Trennwandelement angeordnet ist, das als ein Aufpralldämpfungselement dienen kann.

Die Druckschrift WO 2017/155566 A1 offenbart eine Flugzeugsitzvorrichtung mit einer Rückenlehneneinheit, die einen Kopfbereich umfasst, in dem zumindest ein eine Rückenlehnenschale verstärkendes Trägerelement und in Richtung einer Rückseite der Rückenlehneneinheit ein dem Trägerelement nachgeordnetes Querträgerelement angeordnet ist.

Die Druckschrift WO 2018/009201 A1 offenbart eine Flugzeugsitzvorrichtung mit einer Rückenlehneneinheit, die einen Kopfbereich mit zumindest einer Sandwicheinheit umfasst, die ein Wandelement und in Richtung einer Rückseite der Rückenlehneneinheit ein dem Wandelement nachgeordnetes Hartschaumelement aufweist, welches als eine Füllung eines Zwischenraums zwischen dem Wandelement und einem Rückwandelement ausgebildet ist.

Die Aufgabe der Erfindung besteht insbesondere darin, eine gattungsgemäße Vorrichtung mit verbesserten Eigenschaften hinsichtlich einer Sicherheit und einer Modularität bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzvorrichtung, mit einer Rückenlehneneinheit, die einen Kopfbereich mit zumindest einer Sandwicheinheit umfasst, die zumindest ein Trägerelement und in Richtung einer Rückseite der Rückenlehneneinheit zumindest ein dem Trägerelement nachgeordnetes Aufpralldämpfungselement, insbesondere ein Hartschaumelement aufweist.

Es wird vorgeschlagen, dass die Rückenlehneneinheit ein Funktionsbauteil und/oder die Sandwicheinheit ein Einsatzbauteil umfasst, wobei das Hartschaumelement zumindest eine Ausnehmung Z r aufweist, wobei jede Ausnehmung dazu vorgesehen ist ein solches Funktionsbauteil oder ein solches Einsatzbauteil aufzunehmen.

Unter einer "Flugzeugsitzvorrichtung" soll insbesondere eine Vorrichtung verstanden werden, die zumindest einen Teil, oder einen kompletten Flugzeugsitz ausbildet. Unter einem "Flugzeugsitz" soll vorzugsweise ein Sitz, insbesondere ein Fluggastsitz, verstanden werden, der dazu vorgesehen ist, über eine Aufständereinheit in einer Flugzeugkabine aufgeständert zu werden und einen Sitzplatz für einen Passagier, insbesondere während eines Flugs, bereitzustellen. Der Flugzeugsitz weist vorzugsweise zumindest eine Sitzbodeneinheit, eine Rückenlehneneinheit und eine Armlehneneinheit auf, die vorzugsweise über die Aufständereinheit angebunden sind. Unter einer "Rückenlehneneinheit" soll dabei insbesondere eine Einheit verstanden werden, die zumindest einen Teil einer Rückenlehne eines Flugzeugsitzes, ausbildet, wobei die Rückenlehneneinheit zumindest einen tragenden Rahmen umfasst, der in sich steif ausgebildet und insbesondere dazu vorgesehen ist, in die Rückenlehneneinheit eingeleitete Kräfte an eine Aufständereinheit des Flugzeugsitzes weiterzuleiten, sodass diese Kräfte insbesondere in einen Kabinenboden, auf dem der Flugzeugsitz aufgeständert ist, abgeleitet werden können. Unter einem "Kopfbereich" soll insbesondere ein oberer Bereich der Rückenlehneneinheit verstanden werden. Vorzugsweise ist der Kopfbereich in den oberen 30 cm der Rückenlehneneinheit angeordnet. Vorzugsweise ist der Kopfbereich insbesondere als ein Teil ausgebildet, in dem in einem Crashfall ein Kopf eines hinter dem Flugzeugsitz sitzenden Passagiers auf die Rückenlehneneinheit auftreffen würde. Unter einer "Sandwicheinheit" soll insbesondere eine Einheit aus zumindest zwei, vorzugsweise drei miteinander verbunden Elementen verstanden werden. Unter einem "Trägerelement" soll insbesondere ein Element verstanden werden, das dazu vorgesehen ist, eine Grundstruktur auszubilden, mit der andere Elemente verbunden werden können, wobei insbesondere Kräfte über das Trägerelement in einen Rahmen, insbesondere einen Rahmen der Rückenlehneneinheit abgeleitet werden können. Vorzugsweise ist das Trägerelement insbesondere als eine Platte ausgebildet. Vorzugsweise ist das Trägerelement als eine Metallplatte oder eine Platte aus einem Composite oder einem Kunststoff gebildet. Das Trägerelement ist insbesondere dazu vorgesehen, dass Bauteile, insbesondere Funktionsbauteile über das Trägerelement an die Rückenlehne angebunden werden können. Zur Anbindung von weiteren Elementen weist das Trägerelement vorzugsweise insbesondere einen Montagebereich auf, in dem das Trägerelement Befestigungselemente, wie insbesondere Durchgangslöcher oder andere Formschlusselemente aufweist. Unter einem "Aufpralldämpfungselement" soll insbesondere ein Element verstanden werden, das dazu vorgesehen ist, im Fall eines Aufpralls von einem Element, wie beispielsweise insbesondere einem Kopf eines Passagiers, eine Aufprallenergie aufzunehmen und umzuwandeln. Vorzugsweise ist das Aufpralldämpfungselement insbesondere durch plastische und elastische Verformung dazu vorgesehen, eine Aufprallenergie umzuwandeln und so einen Aufprall zu dämpfen. Das Aufpralldämpfungselement kann dabei vorzugsweise insbesondere aus einem Schaum, insbesondere einem Partikelschaum, gebildet sein, oder in einer anderen Ausgestaltung, beispielsweise auch aus einem Wabenelement, einem anderen Schaum, oder einem anderen Element mit einer entsprechenden Raumdichte. Unter einem "Hartschaumelement" soll vorzugsweise insbesondere ein Partikelschauelement verstanden werden, das zumindest im Wesentlichen aus einem Partikelschaum gebildet ist. Unter einem "Hartschaumelement" soll insbesondere ein Element verstanden werden, das zumindest zu über 50 %, vorzugsweise zu zumindest 80% und besonders bevorzugt zu 100 % aus einem Schaum, insbesondere einem Hartschaum gebildet ist. Unter einem Hartschaum soll insbesondere ein PP-Schaum verstanden werden. Das Hartschaumelement ist vorzugsweise insbesondere aus einem PP-Schaum (Polypropylen Schaum) gebildet. Das Hartschaumelement weist vorzugsweise eine Schaumdichte von 30 - 70 Gramm pro Liter, vorzugsweise insbesondere eine Schaumdichte von 40 - 60 Gramm pro Liter auf. Vorzugsweise ist das Hartschaumelement flammhemmend ausgebildet. Das Hartschaumelement ist insbesondere schwer entflammbar. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch eine erfindungsgemäße Ausgestaltung kann vorteilhaft eine Rückenlehneneinheit bereitgestellt werden, die besonders sicher ausgebildet ist. Durch das Hartschaumelement kann in einem Crashfall ein Aufprall eines Kopfes eines Passagiers, der auf einem hinter der Rückenlehneneinheit angeordneten Flugzeugsitz sitzt, auf der Rückenlehneneinheit besonders vorteilhaft abgedämpft werden.

Weiter wird vorgeschlagen, dass das Trägerelement dazu vorgesehen ist, in einem Aufprall Kräfte aufzunehmen. Unter einem "Aufprall" soll insbesondere ein Aufprall eines Kopfes eines Passagiers, oder im Falle eines Crashtests, der Kopf eines Crashtestdummys auf der Rückenlehneneinheit verstanden werden. Unter "Kräfte aufnehmen" soll insbesondere verstanden werden, dass das Trägerelement durch plastische und/oder elastische Verformung Kräfte, wie insbesondere Zug-, Druck- und oder Torsionskräfte, aufnehmen und zumindest teilweise umwandeln kann. Dadurch kann das Trägerelement besonders vorteilhaft für einen Crashfall ausgebildet werden.

Ferner wird vorgeschlagen, dass das Trägerelement von einem Plattenelement gebildet ist. Unter einem "Plattenelement" soll insbesondere ein Element verstanden werden, das eine dünne Wandstärke aufweist. Ein Plattenelement ist vorzugsweise insbesondere als ein flächiges Element ausgebildet, das vorzugsweise insbesondere eine im Vergleich zu seiner Erstreckung in zwei Raumrichtungen dünne Wandstärke aufweist. Dadurch kann das Trägerelement besonders vorteilhaft ausgebildet werden.

Es wird weiterhin vorgeschlagen, dass das Trägerelement von einem biegeweichen Bauteil, insbesondere von einem Gewebe und/oder einer Folie gebildet ist. Ist das Trägerelement von einem biegeweichen Bauteil gebildet, so ist das Trägerelement vorzugsweise beidseitig, also auf einer Vorderseite, als auch auf einer Rückseite von dem Hartschaumelement umgeben. Das biegeweiche Trägerelement ist vorzugsweise insbesondere als ein Einleger in dem Hartschaumelement ausgebildet. Das Trägerelement kann vorzugsweise insbesondere als Einleger ausgebildet sein, der in das Hartschaumelement eingeschäumt ist. Das Trägerelement bildet zusammen mit dem Hartschaumelement ein Verbund aus. Dadurch kann das Trägerelement vorzugsweise besonders leicht, also mit einem geringen Gewicht ausgebildet werden.

Des Weiteren wird vorgeschlagen, dass das Trägerelement in einer weiteren Ausführung von einer Beschichtung des Hartschaumelements gebildet ist. Unter einer "Beschichtung" soll insbesondere eine auf eine Oberfläche vorzugsweise dünn aufgebrachte Schicht verstanden werden, die vorzugsweise zum Schutz des darunter liegenden Bauteils, oder zur Verschönerung des Bauteils vorgesehen ist. Grundsätzlich ist es auch denkbar, dass die Beschichtung so ausgebildet ist, dass diese Kräfte übertragen kann und so zumindest teilweise als ein Trägerelement ausgebildet werden kann. Dadurch kann das Trägerelement besonders einfach und leicht ausgebildet werden.

Weiterhin wird vorgeschlagen, dass das Trägerelement in einer Sitzrichtung betrachtet zumindest teilweise im Wesentlichen konkav ausgebildet ist. Unter "im Wesentlichen konkav" soll insbesondere verstanden werden, dass ein Bauteil, wie insbesondere das Trägerelement in seiner Gesamtheit konkav ausgebildet ist. Das Trägerelement ist vorzugsweise insbesondere nicht streng konkav ausgebildet. Unter "in Sitzrichtung betrachtet" soll vorzugsweise in einem montierten Zustand in Sitzrichtung betrachtet verstanden werden. Unter einer "Sitzrichtung" soll vorzugsweise insbesondere eine Richtung verstanden werden, die in einem montierten Zustand des Flugzeugsitzes im Wesentlichen senkrecht auf einer Rückenlehnenfläche der Rückenlehneneinheit steht und vorzugsweise insbesondere im Wesentlichen parallel zu einer Aufständerebene, auf der der Flugzeugsitz aufgeständert ist, ausgerichtet ist. Dadurch weist das Trägerelement ein besonderes vorteilhaftes Flächenträgheitsmoment auf und kann dadurch bei einem geringen Gewicht vorteilhaft biegesteif ausgebildet werden.

Unter einem "Einsatzbauteil" soll insbesondere ein Bauteil verstanden werden, das dazu vorgesehen ist, in eine Ausnehmung eingesetzt zu werden, um diese insbesondere bei Nichtgebrauch zu verschließen und vorzugsweise zumindest im Wesentlichen auszufüllen. Das Einsatzbauteil weist auf einer Seite vorzugsweise zumindest im Wesentlichen eine gleiche Kontur auf wie die Ausnehmung, in der es angeordnet sein soll. Vorzugsweise schließt ein Einsatzbauteil eine Ausnehmung, in der es angeordnet ist, ebenbündig ab. Dadurch kann das Hartschaumelement besonders vorteilhaft zur Anbindung von Funktionselementen an die Rückenlehneneinheit ausgebildet werden.

Unter "zumindest teilweise in der Ausnehmung aufgenommen" soll insbesondere verstanden werden, dass zumindest ein Teil, vorzugsweise zumindest 70%, vorzugsweise 90% und in einer besonders vorteilhaften Ausgestaltung das gesamte Einsatzbauteil in der Ausnehmung angeordnet ist. Dadurch kann eine nicht gebrauchte Ausnehmung vorzugsweise verschlossen werden und eine Steifigkeit des Hartschaumelements im Gegensatz zu einem Zustand in dem kein Einsatzbauteil in der Ausnehmung angeordnet ist, vorteilhaft erhöht werden.

Zudem wird vorgeschlagen, dass das wenigstens eine Einsatzbauteil zumindest teilweise mit dem Hartschaumelement stoffschlüssig verbunden ist. Unter "stoffschlüssig verbunden" soll insbesondere mittels einer stoffschlüssigen Verbindung, wie insbesondere einer Klebeverbindung verbunden, oder einstückig ausgestaltet verstanden werden. Dadurch kann das Einsatzbauteil besonders vorteilhaft in dem Hartschaumelement angeordnet werden.

Weiter wird vorgeschlagen, dass das Hartschaumelement mehrteilig ausgebildet ist. Dadurch kann das Hartschaumelement besonders vorteilhaft ausgebildet werden, insbesondere zusammen mit dem Einsatzbauteil.

Ferner wird vorgeschlagen, dass die Flugzeugsitzvorrichtung zumindest ein Abdeckelement aufweist, das das Hartschaumelement auf der Rückseite der Rückenlehneneinheit zumindest teilweise abdeckt. Unter einem "Abdeckelement" soll insbesondere ein Element verstanden werden, das ein weiteres Element, wie insbesondere das Hartschaumelement in eine Richtung abschließt, um ein Bauteil, wie insbesondere die Rückenlehneneinheit abzuschließen. Das Abdeckelement ist vorzugsweise insbesondere aus einem formstabilen Kunststoff oder Composite gebildet. Vorzugsweise ist es auch denkbar, dass das Abdeckelement stoffschlüssig mit dem Hartschaumelement verbunden ist und beispielsweise durch eine Klebeverbindung mit dem Hartschaumelement verbunden ist, oder bei einem Herstellverfahren an das Hartschaumelement angespritzt ist. Unter "zumindest teilweise abdeckt" soll insbesondere verstanden werden, dass zumindest ein Teil des Hartschaumelements von dem Abdeckelement in zumindest eine Richtung überdeckt wird, wobei vorzugsweise ein Hauptteil und besonders vorteilhaft das gesamte Hartschaumelement überdeckt wird. Vorzugsweise ist das Abdeckelement dazu vorgesehen, die gesamte Rückenlehneneinheit nach hinten zu überdecken und damit nach hinten abzuschließen. Dadurch kann die Rückenlehneneinheit zumindest im Kopfbereich vorteilhaft nach hinten abgedeckt und abgeschlossen werden.

Unter einem "Funktionsbauteil" soll insbesondere ein Bauteil verstanden werden, dass an der Rückenlehneneinheit angebracht werden kann und insbesondere eine Funktion für einen Passagier, insbesondere für einen hinter dem Flugzeugsitz, der die Rückenlehneneinheit aufweist, sitzenden Passagier bereitstellt. Das Funktionselement kann vorzugsweise insbesondere als ein Getränkehalter, als ein Elektronikanschluss, als ein Tablethalter, als ein Handyhalter, als eine Aufbewahrungsbox, als eine Anzeigeeinheit, oder als ein anderes, dem Fachmann als sinnvoll erscheinendes Bauteil ausgebildet sein. Dadurch kann die Rückenlehneneinheit besonders vorteilhaft ausgebildet werden und insbesondere Funktionen für einen Passagier aufweisen.

Des Weiteren wird vorgeschlagen, dass das Funktionsbauteil in einem in dem Hartschaumelement eingebauten Zustand eine Steifigkeit aufweist, die sich von einer Steifigkeit des Einsatzbauteils in einem in dem Hartschaumelement eingebauten Zustand um maximal 10%, vorzugsweise maximal 5% und besonders bevorzugt um maximal 2% unterscheidet. Dadurch kann vorteilhaft erreicht werden, dass für einen Flugzeugsitz mit einer Rückenlehneneinheit mit unterschiedlichen Konfigurationen im Kopfbereich lediglich ein Crashtest durchgeführt werden muss, wodurch insbesondere Kosten bei einer Zulassung gespart werden können.

Die erfindungsgemäße Flugzeugsitzvorrichtung soll hierbei nicht auf die oben beschriebene Anwendung und Ausführungsform beschränkt sein. Insbesondere kann die erfindungsgemäße Flugzeugsitzvorrichtung zu einer Erfüllung einer hierin beschriebenen Funktionsweise eine von einer hierin genannten Anzahl von einzelnen Elementen, Bauteilen und Einheiten abweichende Anzahl aufweisen, wenn es in den Anwendungsbereich der beigefügten Ansprüche fällt.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäßen Flugzeugsitzvorrichtung mit einer Rückenlehneneinheit und einer Sandwicheinheit, wobei eine Abdeckeinheit lediglich zur Hälfte dargestellt ist,
- Fig. 2: eine schematische Darstellung der Rückenlehneneinheit von hinten mit zwei Funktionsbauteilen,
- Fig. 3: eine schematische Darstellung eines Teils einer nicht komplett montierten Rückenlehneneinheit mit einem Rahmen und einem daran im Kopfbereich befestigten Trägerelement,
- Fig. 4: einen schematischen Horizontalschnitt durch die Rückenlehneneinheit im Kopfbereich,
- Fig. 5: eine Explosionsdarstellung des Horizontalschnitts der Figur 4,
- Fig. 6: eine schematische Frontansicht eines Hartschaumelements der Sandwicheinheit,
- Fig. 7: einen schematischen seitlichen Vertikalschnitt durch die Rückenlehneneinheit,
- Fig. 8: eine schematische Darstellung einer Rückenlehneneinheit mit einem anderen Funktionsbauteil,
- Fig. 9: eine schematische Darstellung einer anderen Ausgestaltung des Hartschaumelements mit Einsatzbauteilen,
- Fig. 10: eine schematische Schnittansicht durch eine Sandwicheinheit in einer Ausführungsform mit einem biegeweichen Trägerelement, das von einem Hartschaumkern zumindest im Wesentlichen umgeben ist.

### Beschreibung des Ausführungsbeispiels

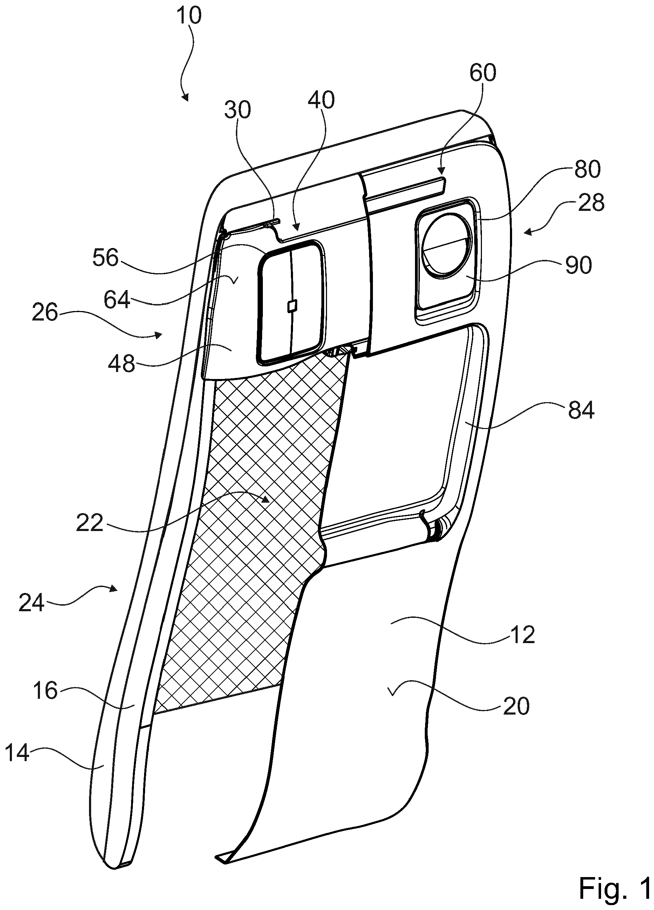

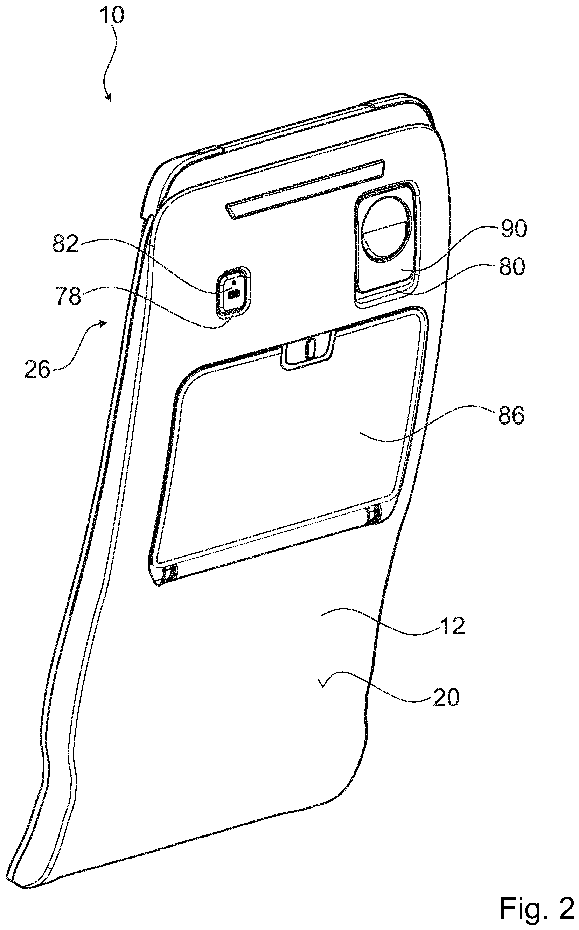

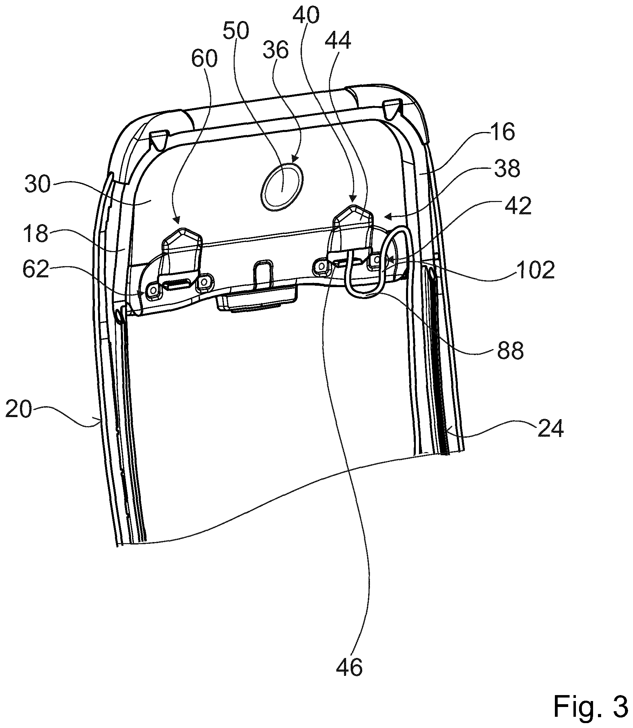

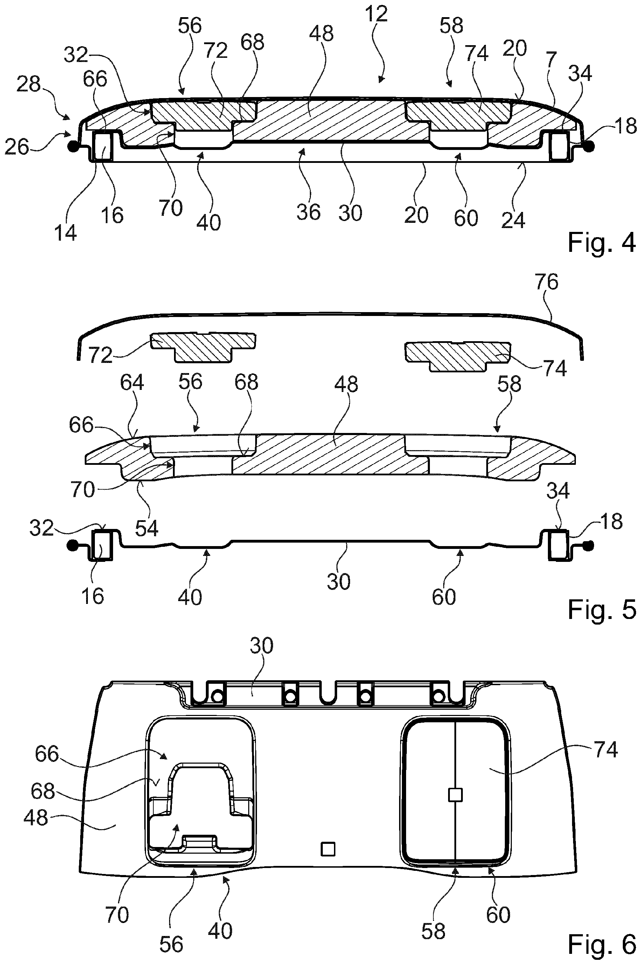

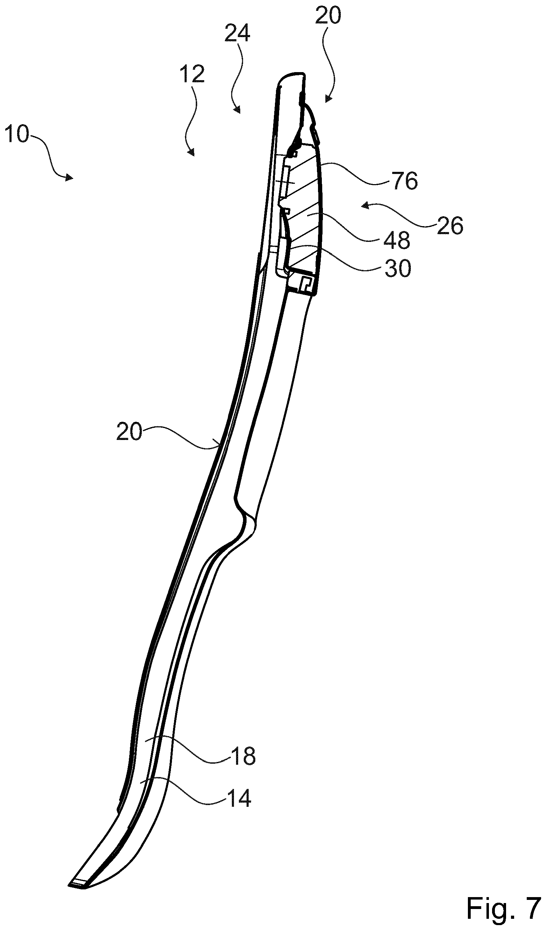

Die Figuren 1 bis 10 zeigen eine erfindungsgemäße Flugzeugsitzvorrichtung. Die Flugzeugsitzvorrichtung ist Teil eines teilweise dargestellten Flugzeugsitzes 10. Der Flugzeugsitz 10 ist vorzugsweise als ein Economy-Flugzeugsitz ausgebildet. Der Flugzeugsitz 10 ist vorzugsweise als ein Teil einer Sitzreihe mit mehreren Flugzeugsitzen ausgebildet. Der Flugzeugsitz 10 ist dazu vorgesehen, in einer Flugzeugkabine angeordnet zu werden. Der Flugzeugsitz 10 weist vorzugsweise eine nicht näher dargestellte Aufständereinheit auf, mittels der der Flugzeugsitz 10 auf einem Kabinenboden der Flugzeugkabine aufständerbar ist. Vorzugsweise ist die Aufständereinheit insbesondere dazu vorgesehen, Flugzeugsitze 10 einer Flugzeugsitzreihe zusammen auf dem Kabinenboden aufzustützen. Der Flugzeugsitz 10 umfasst eine nicht näher dargestellte Sitzbodeneinheit. Die Sitzbodeneinheit ist dazu vorgesehen, eine Sitzfläche des Flugzeugsitzes 10 auszubilden. Die Sitzbodeneinheit ist vorzugsweise mit der Aufständereinheit gekoppelt. Die Flugzeugsitzvorrichtung umfasst eine Rückenlehneneinheit 12. Die Rückenlehneneinheit 12 bildet vorzugsweise eine Rückenlehneneinheit 12 des Flugzeugsitzes 10 aus. Die Rückenlehneneinheit 12 ist vorzugsweise über die Aufständereinheit an den Flugzeugsitz 10 angebunden. Die Rückenlehneneinheit 12 ist vorzugsweise dazu vorgesehen, verschwenkbar mit der Aufständereinheit verbunden zu sein. Vorzugsweise ist die Rückenlehneneinheit 12 zwischen einer aufrechten Sitzstellung und einer nach hinten geneigten Komfortstellung verschwenkbar. Grundsätzlich ist es auch denkbar, dass die Rückenlehneneinheit 12 starr mit der Aufständereinheit verbunden ist und nicht für eine Winkelverstellung, insbesondere während einer Benutzung vorgesehen ist.

Die Rückenlehneneinheit 12 umfasst vorzugsweise einen tragenden Rahmen 14. Der tragende Rahmen 14 ist dazu vorgesehen, in die Rückenlehneneinheit 12 eingeleitete Kräfte, die insbesondere während eines Gebrauchs des Flugzeugsitzes 10 auf die Rückenlehneneinheit 12 wirken, in die Aufständereinheit weiter- und abzuleiten. Der tragende Rahmen 14 ist vorzugsweise insbesondere in sich steif ausgebildet und dazu vorgesehen, ein Torsionsmoment übertragen zu können. Der tragende Rahmen 14 ist dabei aus einem Metallprofil gebildet. Der tragende Rahmen 14 ist vorzugsweise insbesondere aus einem Profilelement, vorzugsweise insbesondere als ein Metallprofil ausgebildet. Der tragende Rahmen 14 ist vorzugsweise aus einer Aluminiumlegierung gebildet. Grundsätzlich ist es auch denkbar, dass der tragende Rahmen 14 aus einem anderen Metall, wie beispielsweise aus einer Magnesiumlegierung, oder einer Titanlegierung gebildet ist. Grundsätzlich ist es ebenso denkbar, dass der tragende Rahmen 14 aus einem anderen, dem Fachmann als sinnvoll erscheinenden Material gebildet ist, wie insbesondere einem Faserverbundwerkstoff, wie insbesondere einem CFK oder einem GFK. Der tragende Rahmen 14 der Rückenlehneneinheit 12 bildet eine im Wesentlichen U-förmige Grundform aus. Vorzugsweise ist der tragende Rahmen 14 in einem montierten Zustand nach unten, in Richtung der Aufständereinheit geöffnet. An einem oberen Ende, das in einem montierten Zustand der Aufständereinheit abgewandt ist, ist der tragende Rahmen 14 geschlossen ausgebildet. Der tragende Rahmen 14 weist zwei Seitenrahmenelemente 16, 18 auf. Die Seitenrahmenelemente 16, 18 bilden den tragenden Rahmen 14 seitlich aus. Die beiden Seitenrahmenelemente 16, 18 sind in einem oberen Ende zur Ausbildung des im Wesentlichen U-förmigen Rahmens 14 miteinander verbunden. Die beiden Seitenrahmenelemente 16, 18 sind vorzugsweise einstückig miteinander ausgebildet. Grundsätzlich ist es auch denkbar, dass die Seitenrahmenelemente 16, 18 als separat ausgebildete Einzelteile ausgebildet sind, die an ihren oberen Enden direkt oder über ein Zwischenelement miteinander gekoppelt sind. An ihren unteren Enden, die der Aufständereinheit zugewandt sind, sind die Seitenrahmenelemente 16, 18 jeweils fest mit der Aufständereinheit gekoppelt. Vorzugsweise sind die Seitenrahmenelemente 16, 18 jeweils über ein Schwenklager drehbar mit Sitzteilern der Aufständereinheit gekoppelt. Grundsätzlich ist es vorzugsweise auch denkbar, dass die Rückenlehneneinheit 12 starr mit der Aufständereinheit gekoppelt ist und die Seitenrahmenelemente 16, 18 dazu jeweils in einer definierten Position fixiert an der Aufständereinheit angebunden sind.

Die Rückenlehneneinheit 12 weist eine Bespannung 22 auf, die die Rückenlehnenfläche ausbildet. Die Bespannung 22 ist vorzugsweise von einem Textil gebildet. Die Bespannung 22 ist in den tragenden Rahmen 14 der Rückenlehneneinheit 12 eingespannt ist. Die Bespannung 22 ist auf einer Vorderseite 24 der Rückenlehneneinheit 12 angeordnet. Eine in Sitzrichtung nach vorne gewandte Seite der Bespannung 22 bildet dabei die Rückenlehnenfläche der Rückenlehneneinheit 12 aus. Auf der Bespannung 22 kann vorzugsweise in einem montierten Zustand eine nicht näher dargestellte Polstereinheit angebracht sein.

An einem oberen Ende bildet die Rückenlehneneinheit 12 einen Kopfbereich 26 aus. Die Rückenlehneneinheit 12 weist eine Sandwicheinheit 28 auf. Die Sandwicheinheit 28 ist in dem Kopfbereich 26 der Rückenlehneneinheit 12 angeordnet. Die Sandwicheinheit 28 ist vorzugsweise fest mit dem tragenden Rahmen 14 verbunden. Die Sandwicheinheit 28 ist in dem Kopfbereich 26 vorzugsweise zwischen den Seitenrahmenelementen 16, 18 angeordnet. Die Sandwicheinheit 28 ist vorzugsweise starr mit dem tragenden Rahmen 14, insbesondere mit den Seitenrahmenelementen 16, 18 des Rahmens 14 der Rückenlehneneinheit 12 verbunden. Die Sandwicheinheit 28 umfasst ein Trägerelement 30. Das Trägerelement 30 ist als ein Plattenelement ausgebildet. Vorzugsweise ist das Trägerelement 30 insbesondere von einer Metallplatte gebildet. Grundsätzlich ist es auch denkbar, dass das Trägerelement 30 aus einem anderen, dem Fachmann als sinnvoll erscheinenden Material gebildet ist, wie insbesondere beispielsweise einem Faserverbundwerkstoff, oder einem Kunststoff. Das Trägerelement 30 erstreckt sich in einem montierten Zustand zwischen den Seitenrahmenelementen 16, 18 des tragenden Rahmens 14. Das Trägerelement 30 bildet in seinen Seitenbereichen insbesondere Verbindungsbereiche 32, 34 auf, mittels denen das Trägerelement 30 fest mit dem Rahmen 14 verbindbar ist. Das Trägerelement 30 ist in den Verbindungsbereichen 32, 34 jeweils fest mit einem Seitenrahmenelement 16, 18 verbunden. Die Verbindungsbereiche 32, 34 des Trägerelements 30 sind vorzugsweise insbesondere auf einer einer Rückseite 20 der Rückenlehneneinheit 12 zugewandten Seite der Seitenrahmenelemente 16, 18 angebunden. Das Trägerelement 30 ist in den Verbindungsbereichen 32, 34 vorzugsweise über eine Formschlussverbindung mit den Seitenrahmenelementen 16, 18 verbunden. Das Trägerelement 30 ist vorzugsweise insbesondere mittels einer Schraub- oder Nietverbindung mit dem tragenden Rahmen 14, insbesondere den Seitenrahmenelementen 16, 18 verbunden. Grundsätzlich ist es auch denkbar, dass das Trägerelement 30 mittels einer stoffschlüssigen Verbindung fest mit dem tragenden Rahmen 14 verbunden ist, wie beispielsweise insbesondere über eine Klebe- oder Schweißverbindung.

Das Trägerelement 30 ist vorzugsweise insbesondere als ein Konturblech ausgebildet. Das Trägerelement 30 weist vorzugsweise eine Kontur auf. Das Trägerelement 30 ist in einem montierten Zustand in einer Sitzrichtung betrachtet konkav ausgestaltet. Vorzugsweise ist das Trägerelement 30 nicht streng konkav ausgebildet. Grundsätzlich wäre es aber denkbar, dass das Trägerelement 30 zumindest im Wesentlichen streng konkav ausgebildet und zwischen seinen Verbindungsbereichen 32, 34 eine durchgehende Krümmung aufweist. Das Trägerelement 30 weist zwischen seinen Verbindungsbereichen 32, 34 einen Mittelbereich 36 auf. Der Mittelbereich 36 ist in einem montierten Zustand zwischen den Seitenrahmenelementen 16, 18 des tragenden Rahmens 14 angeordnet. In dem Mittelbereich 36 erstreckt sich das Trägerelement 30 in Sitzrichtung nach vorne, insbesondere in Richtung der Vorderseite 24 der Rückenlehneneinheit 12. Das Trägerelement 30 bildet in dem Mittelbereich 36 eine Vertiefung aus. Durch die konkave Ausbildung in dem Mittelbereich 36, also durch die Vertiefung ist ein Flächenträgheitsmoment des Trägerelements 30 im Vergleich zu einer ebenen Ausbildung eines Trägerelements 30 größer, sodass das Trägerelement 30 eine besonders vorteilhafte Torsionssteifigkeit aufweist. Das Trägerelement 30 ist vorzugsweise insbesondere dazu vorgesehen, die Rückenlehneneinheit 12, insbesondere den tragenden Rahmen 14 in dem Kopfbereich 26 auszusteifen. Durch das Trägerelement 30 kann die Rückenlehneneinheit 12 mit einer besonders vorteilhaften Torsionssteifigkeit bereitgestellt werden. Das Trägerelement 30 ist vorzugsweise insbesondere dazu vorgesehen ist, in einem Aufprall Zugkräfte aufzunehmen. Das Trägerelement 30 ist zur Aufnahme von Zugkräften bei einem Aufprall insbesondere dazu vorgesehen, zumindest teilweise plastisch verformt zu werden. Vorzugsweise ist das Trägerelement 30 dazu vorgesehen, nicht zu reißen. Grundsätzlich ist es denkbar, dass die Rückenlehneneinheit 12, insbesondere der tragende Rahmen 14 in anderen Teilbereichen 30 weitere querverlaufende Versteifungselemente aufweist.

Das Trägerelement 30 ist vorzugsweise zumindest teilweise als ein Montageelement ausgebildet. Das Trägerelement 30 ist insbesondere dazu vorgesehen, dass Bauteile des Flugzeugsitzes 10 daran montierbar sind. Über das Trägerelement 30 sind Bauteile des Flugzeugsitzes 10 fest mit dem Flugzugsitz gekoppelt. Mittels dem Trägerelement 30 sind Bauteile des Flugzeugsitzes 10 in dem Kopfbereich 26 der Rückenlehneneinheit 12 fest angebunden. Vorzugsweise sind Bauteile insbesondere auf einer nach hinten ausgerichteten Rückseite des Trägerelements 30 angebunden und so an dem Flugzeugsitz 10 befestigt. Das Trägerelement 30 weist einen Montagebereich 38 auf. Der Montagebereich 38 ist vorzugsweise zumindest im Wesentlichen in dem Mittelbereich 36 des Trägerelements 30 angeordnet. Der Montagebereich 38 umfasst einen ersten Anbindungsbereich 40. Der erste Anbindungsbereich 40 ist an einer dem einen Seitenrahmenelement 16 zugewandten Hälfte des Trägerelements 30 in dem Kopfbereich 26 angeordnet. Vorzugsweise ist der erste Anbindungsbereich 40 insbesondere im Wesentlichen in einer Mitte der dem einen Seitenrahmenelement 16 zugewandten Hälfte des Trägerelements 30 angeordnet. Der erste Anbindungsbereich 40 ist zur Anbindung eines Funktionsbauteils vorgesehen. Der erste Anbindungsbereich 40 weist Befestigungselemente 42 auf. Die Befestigungselemente 42 sind vorzugsweise als Durchgangslöcher in dem Trägerelement 30 ausgebildet. Der Anbindungsbereich 40 weist hier bespielhaft zwei Befestigungselemente 42 auf. Grundsätzlich ist es auch denkbar, dass der Anbindungsbereich 40 eine andere Anzahl Befestigungselemente 42 aufweist. Vorzugsweise ist es insbesondere denkbar, dass der Anbindungsbereich 40 mehr Befestigungselemente 42 aufweist als zur Befestigung eines Funktionsbauteils notwendig sind, sodass insbesondere unterschiedliche Anbindungsmuster ausgebildet werden, sodass zur Ausbildung von unterschiedlichen Rückenlehneneinheitsvarianten unterschiedliche Bauteile an gleich ausgebildete Trägerelemente 30 in dem Anbindungsbereich 40 angebunden werden können. Der Anbindungsbereich 40 bildet eine Montagekontur 44 aus. Die Montagekontur 44 ist vorzugsweise als eine Vertiefung ausgebildet, die eine definierte Kontur ausbildet, die dazu vorgesehen ist, dass Bauteile zur positionssicheren und festen Anbindung zumindest teilweise, insbesondere mit entsprechenden Abstützflächen daran anliegen können. Dadurch kann eine besonders positionssichere und einfache Montage, und insbesondere auch eine feste Anbindung eines Funktionsbauteils an das Trägerelement 30 erreicht werden. Der Anbindungsbereich 40 umfasst einen Durchführungsschlitz 46. Der Durchführungsschlitz 46 ist insbesondere dazu vorgesehen, dass Elemente, wie beispielsweise Kabel oder andere Verbindungselemente von einer Vorderseite des Trägerelements 30 zu einer Rückseite des Trägerelements 30 geführt werden können. So kann vorteilhaft ein Kanal bereitgestellt werden, durch den beispielsweise ein Stromversorgungskabel zu einem in dem Anbindungsbereich 40 angeordneten elektrischen oder elektronischen Funktionsbauteil besonders einfach und direkt geführt werden kann.

Der Montagebereich 38 umfasst einen zweiten Anbindungsbereich 60. Der zweite Anbindungsbereich 60 ist zur Anbindung eines Funktionsbauteils vorgesehen. Der zweite Anbindungsbereich 60 weist Befestigungselemente 62 auf. Die Befestigungselemente 62 sind vorzugsweise als Durchgangslöcher in dem Trägerelement 30 ausgebildet. Der zweite Anbindungsbereich 60 ist im Wesentlichen gleich ausgebildet wie der erste Anbindungsbereich 40. Grundsätzlich wäre es auch denkbar, dass der zweite Anbindungsbereich 60 anders ausgebildet ist als der erste Anbindungsbereich 40, beispielsweise insbesondere unterschiedlich angeordnete Befestigungselemente 62, also ein unterschiedliches Lochmuster aufweist. Der zweite Anbindungsbereich 60 ist einer dem zweiten, rechten Seitenrahmenelement 18 zugewandten Hälfte des Trägerelements 30 in dem Kopfbereich 26 angeordnet. Vorzugsweise ist der zweite Anbindungsbereich 60 insbesondere im Wesentlichen in einer Mitte der dem einen Seitenrahmenelement 18 zugewandten Hälfte des Trägerelements 30 angeordnet. Die beiden Anbindungsbereiche 40, 60 sind vorzugsweise spiegelsymmetrisch zu einer vertikalen Mittelachse der Rückenlehneneinheit 12 zueinander angeordnet.

Grundsätzlich wäre es auch denkbar, dass der Montagebereich 38 eine andere Anzahl Anbindungsbereiche 40, 60 aufweist. Vorzugsweise kann das Montagebereichs 38 beispielsweise einen mittig zwischen den Seitenrahmenelementen 16, 18 angeordneten Anbindungsbereich aufweisen. Vorzugsweise ist es insbesondere denkbar, dass unterschiedliche Anbindungsbereiche 40, 60 insbesondere zur Anbindung unterschiedlicher Bauteile an die Rückenlehneneinheit 12 vorgesehen sein können. Grundsätzlich ist es auch denkbar, dass unterschiedliche Anbindungsbereiche 40, 60 zumindest teilweise überlappend angeordnet sind.

Die Sandwicheinheit 28 umfasst ein Hartschaumelement 48. Das Hartschaumelement 48 ist als ein Aufpralldämpfungselement ausgebildet. Das Hartschaumelement 48 ist insbesondere dazu vorgesehen, durch plastische und/oder elastische Verformung bei einem Aufprall eine Aufprallenergie zu absorbieren. Das Hartschaumelement 48 ist vorzugsweise insbesondere dazu vorgesehen, Aufschlagskräfte, die beispielsweise in einem Crashfall durch einen auf den Kopfbereich 26 aufschlagenden Kopf in die Rückenlehneneinheit 12 eingebracht werden zumindest teilweise zu absorbieren. Das Hartschaumelement 48 ist vorzugsweise insbesondere aus einem PP-Schaum gebildet. Das Hartschaumelement 48 weist eine Schaumdichte von 50 Gramm pro Liter auf. Das Hartschaumelement 48 ist insbesondere flammhemmend ausgebildet. Das Hartschaumelement 48 ist in Richtung der Rückseite 20 der Rückenlehneneinheit 12 dem Trägerelement 30 nachgeordnet. Das Hartschaumelement 48 ist insbesondere auf einer Rückseite 64 des Trägerelements 30 angeordnet, die der Vorderseite 24 der Rückenlehneneinheit 12 abgewandt ist, angebracht. Das Hartschaumelement 48 ist auf einer der Bespannung 22 abgewandten Rückseite 64 des Trägerelements 30 angeordnet. Das Hartschaumelement 48 ist vorzugsweise insbesondere in dem Mittelbereich 36 angeordnet. Das Hartschaumelement 48 ist insbesondere in der von dem Trägerelement 30 ausgebildeten Vertiefung angeordnet.

Das Hartschaumelement 48 ist vorzugsweise formschlüssig mit dem Trägerelement 30 verbunden. Das Hartschaumelement 48 ist vorzugsweise über eine über eine kraft- und formschlüssige Verbindung mit dem Trägerelement 30 verbunden. Zur Anbindung des Hartschaumelements 48 weist das Trägerelement 30 eine Montageöffnung 50 auf. Die Montageöffnung 50 ist als ein Durchgangsloch ausgebildet. Die Montageöffnung 50 ist vorzugsweise mittig in dem Trägerelement 30 angeordnet. Die Montageöffnung 50 bildet ein Formschlusselement zur Anbindung des Hartschaumelements 48 aus. Das Hartschaumelement 48 weist ein Formschlusselement 52 auf, das zur Anbindung an das Trägerelement 30 dazu vorgesehen ist, in die Montageöffnung 50 einzugreifen und diese vorzugsweise zu hintergreifen. Das Formschlusselement 52 des Hartschaumelements 48 ist als eine Erhebung ausgebildet. Zu einer Montage wird das Formschlusselement 52 des Hartschaumelements 48 in die Montageöffnung 50 gepresst. Dabei wird das aus Hartschaum gebildete Formschlusselement zumindest teilweise elastisch verformt und so komprimiert. Ist das Formschlusselement 52 bei einer Montage zumindest teilweise durch die Montageöffnung 50 geführt, kann der entsprechende Teilbereich des Formschlusselements 52 wieder expandieren und so einen Rand der Montageöffnung 50 hintergreifen. So kann ein Formschluss zwischen dem Formschlusselement 52 des Hartschaumelements 48 und dem Trägerelement 30 gebildet werden. Dadurch kann das Hartschaumelement 48 vorteilhaft fest mit dem Trägerelement 30 verbunden werden. Mittels des Formschlusselements 52 kann das Hartschaumelement 48 besonders vorteilhaft bei einer Montage an dem Trägerelement 30 fixiert werden. Vorteilhaft kann es grundsätzlich auch denkbar sein, dass das Formschlusselement 52 an einem vorderen Ende ein Hinterschnittelement aufweist, das in einem montierten Zustand dazu vorgesehen ist, weiter hinter das Trägerelement 30 einzugreifen. Grundsätzlich ist es auch denkbar, dass das Hartschaumelement 48 zusätzlich oder lediglich mittels einer Klebeverbindung fest mit dem Trägerelement 30 verbunden ist. Vorzugsweise ist es denkbar, dass das Hartschaumelement 48 in die Vertiefung des Trägerelements 30 eingeklebt ist.

Vorzugsweise weist das Hartschaumelement 48 eine dem Trägerelement 30 in einem montierten Zustand zugewandte Vorderseite 54 auf. Die Vorderseite 54 des Hartschaumelements 48 ist vorzugsweise korrespondierend zu einer Kontur des Trägerelements 30, insbesondere korrespondierend zu einer Kontur des Mittelbereichs 36 des Trägerelements 30 ausgebildet. Die Vorderseite 54 des Hartschaumelements 48 liegt in einem montierten Zustand vorzugsweise komplett an der Rückseite 64 des Trägerelements 30 auf. Grundsätzlich wäre es denkbar, dass das Hartschaumelement 48 mit seiner Vorderseite 54 in Teilbereichen beabstandet von der Rückseite des Trägerelements 30 angeordnet ist. Vorzugsweise ist das Hartschaumelement 48 mit seiner Kontur an das Trägerelement 30 angepasst. Durch seine angepasste Kontur ist das Hartschaumelement 48 vorzugsweise lediglich in einer Ausrichtung mit dem Trägerelement 30 verbindbar. Dadurch kann eine besonders einfache Montage erreicht werden.

Das Hartschaumelement 48 weist Ausnehmungen 56, 58 auf. Die Ausnehmungen 56, 58 sind insbesondere in Bereichen angeordnet, in denen ein Funktionsbauteil an der Rückenlehne, insbesondere in dem Kopfbereich der Rückenlehneneinheit 12 anbringbar ist. Die Ausnehmungen 56, 58 sind vorzugsweise in eine Rückseite 64 des Hartschaumelements 48 eingebracht. Vorzugsweise sind die Ausnehmungen 56, 58 zumindest in Teilbereichen durchgängig ausgebildet, reichen also insbesondere bis an die Vorderseite 54 des Hartschaumelements 48. Das Hartschaumelement 48 weist vorzugsweise die zwei Ausnehmungen 56, 58 auf. Grundsätzlich ist es auch denkbar, dass das Hartschaumelement 48 eine andere Anzahl an Ausnehmungen 56, 58 aufweist, insbesondere eine den Bauteilen, die möglicherweise an die Rückenlehneneinheit 12 angebunden werden können, entspricht. Die Ausnehmungen 56, 58 sind insbesondere jeweils in einem Bereich eines der Anbindungsbereiche 40, 60 angeordnet. Vorzugsweise sind die Ausnehmungen 56, 58 in dem Hartschaumelement 48 zumindest im Wesentlichen deckungsgleich mit jeweils einem der Anbindungsbereiche 40, 60 des Montagebereich 38 angeordnet. Die erste Ausnehmung 56 ist vorzugsweise dem ersten Anbindungsbereich 40 zugeordnet und in dessen Bereich angeordnet. Die zweite Ausnehmung 58 ist vorzugsweise dem zweiten Anbindungsbereich 60 zugeordnet und in dessen Bereich angeordnet. Die zwei Ausnehmungen 56, 58 in dem Hartschaumelement 48 sind vorzugsweise im Wesentlichen gleich ausgebildet. Grundsätzlich wäre es auch denkbar, dass die beiden Ausnehmungen 56, 58 in dem Hartschaumelement 48 unterschiedlich ausgebildet sind.

Die Ausnehmung 56 weist einen ersten Teilbereich 66 auf, in dem der Anbindungsbereich 40 eine Tiefe aufweist, die kleiner ist als eine Dicke des Hartschaumelements 48, insbesondere in dem entsprechenden Bereich des Anbindungsbereichs 40. Der erste Teilbereich 66 der Ausnehmung 56 ist insbesondere der Rückseite 64 des Hartschaumelements 48 zugewandt. Der erste Teilbereich 66 bildet insbesondere einen Bereich aus, in dem Bauteile, die über den entsprechenden Anbindungsbereich 40 an das Trägerelement 30 angebunden sind, zumindest teilweise angeordnet und/oder angebunden sein können. Die Ausnehmung 56 bildet in dem ersten Teilbereich 66 vorzugsweise insbesondere ein Plateau 68 aus. An dem Plateau 68 können vorzugsweise insbesondere Formschlusselemente, beispielsweise in Form von Hakenelementen angeordnet sein, über die Bauteile zumindest teilweise an die Rückenlehneneinheit 12 angebunden sein können. Die Ausnehmung 56 weist einen zweiten Teilbereich 70 auf, in dem die Ausnehmung 56 einen Durchbruch zu der Vorderseite 54 des Hartschaumelements 48 ausbildet. In dem zweiten Teilbereich 70 erstreckt sich die Ausnehmung 56 von der Rückseite 64 bis an die Vorderseite 54 des Hartschaumelements 48. In dem zweiten Teilbereich 70 ist die Ausnehmung 56 als Durchgangsloch ausgebildet. Der zweite Teilbereich 70 ist vorzugsweise insbesondere deckungsgleich mit dem Anbindungsbereich 40, insbesondere deckungsgleich mit den Befestigungselementen 42 ausgebildet. Dadurch kann ein an dem Trägerelement 13 befestigtes Funktionsbauteil vorzugsweise mit einem Anbindungsbereich oder mit seinen Anbindungselementen von einer Rückseite 20 der Rückenlehneneinheit 12 durch das Hartschaumelement 48 zu den Befestigungselementen 42 des Anbindungsbereichs 40 geführt werden. Grundsätzlich ist es auch denkbar, dass die Ausnehmung 56 weitere Teilbereiche aufweist, in denen die Ausnehmung als Durchgangsloch ausgebildet ist. Dabei ist es insbesondere auch denkbar, dass die Ausnehmung 56 in den weiteren Teilbereichen lediglich ein Durchgangsloch aufweist, das lediglich zur Durchführung eines Anbindungselements, wie insbesondere einer Schraube, oder eines Stifts vorgesehen ist. Die Ausnehmung 58 ist im Wesentlichen gleich zu der Ausnehmung 56 ausgebildet und soll deshalb hier nicht näher beschrieben werden. Die Merkmale der Ausnehmung 56 können der vorhergegangenen Beschreibung der Ausnehmung 58 entnommen werden.

Die Sandwicheinheit 28 weist vorzugsweise ein erstes Einsatzbauteil 72 auf. Die Sandwicheinheit 28 weist vorzugsweise insbesondere ein zweites Einsatzbauteil 74 auf. Die Einsatzbauteile 72, 74 sind im Wesentlichen gleich ausgebildet. Die Einsatzbauteile 72, 74 sind insbesondere dazu vorgesehen, in die Ausnehmungen 56, 58 des Hartschaumelements 48 eingesetzt zu werden. Die Einsatzbauteile 72, 74 sind insbesondere dazu vorgesehen in den Ausnehmungen 56, 58 angebracht zu werden, wenn über den entsprechenden dahinter angeordneten Anbindungsbereich 40, 60 keine Bauteile an das Trägerelement 30, also die Rückenlehneneinheit 12 angebracht ist. Die Einsatzbauteile 72, 74 weisen vorzugsweise eine Form auf, die der Form der Ausnehmungen 56, 58 im Wesentlichen entspricht. Vorzugsweise sind die Einsatzbauteile 72, 74 in einem in dem Hartschaumelement 48 angeordneten Zustand komplett in der entsprechenden Ausnehmung 56, 58 angeordnet. Vorzugsweise liegen die Einsatzbauteile 72, 74 mit einer Innenseite an einer Kontur der entsprechenden Ausnehmung 56, 58 an. In einem in einer Ausnehmung 56, 58 angeordneten Zustand schließen Außenseiten der Einsatzbauteile 72, 74 die Ausnehmungen 56, 58 vorzugsweise bündig mit der Rückseite 64 des Hartschaumelements 48 ab. Die Einsatzbauteile 72, 74 sind in einem eingesetzten Zustand vorzugsweise zumindest teilweise mit dem Hartschaumelement 48 stoffschlüssig verbunden. Vorzugsweise sind die Einsatzbauteile 72, 74 in definierten Teilbereichen mit dem Hartschaumelement 48 verklebt. Insbesondere sind die Einsatzbauteile 72, 74 über eine Klebeverbindung in den Ausnehmungen 56, 58 eingeklebt. Grundsätzlich ist es dabei denkbar, dass die Einsatzbauteile 72, 74 über einen oder mehrere Klebepunkte punktuell in die Ausnehmungen 56, 58 eingeklebt sind, oder dass die Einsatzbauteile 72, 74 über eine flächige Klebeschicht in die Ausnehmungen 56, 58 eingeklebt sind. Grundsätzlich wäre es auch denkbar, dass die Einsatzbauteile 72, 74 über eine Kraft- und/oder Formschlussverbindung fest in den Ausnehmungen 56, 58 angeordnet sind. Es ist insbesondere denkbar, dass die Ausnehmungen Formschlusselemente, beispielsweise insbesondere Hakenelemente aufweisen, in die die Einsatzbauteile 72, 74 mit korrespondierend ausgebildeten Formschlusselementen zur Anbringung formschlüssig eingreifen können. Die beiden Einsatzbauteile 72, 74 sind vorzugsweise aus einem Schaum gebildet. Insbesondere sind die Einsatzbauteile 72, 74 aus einem Hartschaum gebildet. Vorzugsweise sind die Einsatzbauteile 72, 74 aus einem gleichen Hartschaum ausgebildet wie das Hartschaumelement 48. Die beiden Einsatzbauteile 72, 74 bilden in einem montierten Zustand, in dem sie mit den Ausnehmungen 56, 58 des Hartschaumelements 48 angeordnet sind, eine Einheit aus. Die Einsatzbauteile 72, 74 bilden einen Teil des Hartschaumelements 48 aus. Das Hartschaumelement 48 ist mehrteilig ausgebildet.

Die Rückenlehneneinheit 12 weist zumindest ein Abdeckelement 76 auf. Das Abdeckelement 76 deckt das Hartschaumelement 48 auf der Rückseite 20 der Rückenlehneneinheit 12 zumindest teilweise ab. Das Abdeckelement 76 ist insbesondere dazu vorgesehen, das Hartschaumelement 48 auf der Rückseite 64 komplett zu überdecken. Vorzugsweise ist das Abdeckelement 76 zur Abdeckung der kompletten Rückseite 64 der Rückenlehneneinheit 12 vorgesehen. Das Abdeckelement 76 bildet vorzugsweise die komplette Rückseite 20 der Rückenlehneneinheit 12 aus. In dem Kopfbereich 26 liegt das Abdeckelement 76 vorzugsweise auf dem Hartschaumelement 48 auf. Das Abdeckelement 76 schließt das Hartschaumelement 48 zwischen dem Abdeckelement 76 und dem Trägerelement 30 ein. Das Hartschaumelement 48 ist zwischen dem Trägerelement 30 und dem Abdeckelement 76 angeordnet. Das Hartschaumelement 48 ist vorzugweise positionssicher zwischen dem Trägerelement 30 und dem Abdeckelement 76 angeordnet. Das Abdeckelement 76 liegt in dem Kopfbereich 26 vorzugsweise an der Rückseite 64 des Hartschaumelements 48 an. Grundsätzlich ist es denkbar, dass das Abdeckelement 76 zumindest teilweise mit der Rückseite 64 des Hartschaumelements 48 verklebt ist. Das Abdeckelement 76 weist in dem Kopfbereich 26 je nach Ausführung und den entsprechenden anzubringenden Bauteilen unterschiedliche Montageöffnungen 78, 80 auf. In den Montageöffnungen 78, 80 sind vorzugsweise an die Rückenlehneneinheit 12 angebrachte Bauteile geführt, die über die entsprechenden Anbindungsbereiche 40, 60 an das Trägerelement 30 angebunden sind. Die Montageöffnungen 78, 80 sind insbesondere in den Bereichen der Anbindungsbereiche 40, 60 des Montagebereichs 38 des Trägerelements 30 angeordnet. Die Montageöffnungen 78, 80 sind deckungsgleich mit den Anbindungsbereichen 40, 60 des Montagebereichs 38 des Trägerelements 30, und insbesondere auch den Ausnehmungen 56, 58 in dem Hartschaumelement 48 angeordnet. Die Montageöffnungen 78, 80 sind in ihrer Form an das entsprechende an die Rückenlehne angebundene Funktionsbauteil ausgebildet. Dabei ist es denkbar, dass die Montageöffnungen 78, 80 komplexere Geometrien aufweisen, die speziell an eine Geometrie eines anzubringenden Funktionsbauteils angepasst sind, oder dass die Montageöffnungen 78, 80 auch als einfache runde Durchgangslöcher ausgebildet sind, durch die ein Verbindungselement, wie beispielsweise insbesondere eine Schraube zur Anbindung hindurchgeführt werden kann. Vorzugsweise ist es grundsätzlich ebenso denkbar, dass das Abdeckelement 76 in dem Bereich einer der Montageöffnungen 78, 80 eine Vertiefung aufweist, mit der sich das Abdeckelement 76 zumindest teilweise in eine entsprechende Ausnehmung 56, 58 des Hartschaumelements 48 erstreckt. Dadurch können insbesondere Bauteile an die Rückenlehneneinheit 12 angebracht werden, die zumindest in einem Zustand, vorzugsweise einem Verstauzustand, zumindest teilweise, vorzugsweise komplett in einem Innenraum der Rückenlehneneinheit 12 angeordnet sind und dadurch insbesondere nicht nach hinten über die von dem Abdeckelement 76 ausgebildete Rückseite 20 der Rückenlehne hinausstehen. Das Abdeckelement 76 weist in einem Bereich unterhalb des Kopfbereichs 26 eine Tischausnehmung 84 auf. Die Rückenlehneneinheit 12 weist ein schwenkbares Tischelement 86 auf, das in einem eingeklappten Zustand in der Tischausnehmung 84 angeordnet ist. Das Tischelement 86 ist über eine Schwenklagerung direkt an der Rückseite der Rückenlehneneinheit 12 angeordnet.

Die Rückenlehneneinheit 12 weist ein erstes Funktionsbauteil 82 auf. Das erste Funktionsbauteil 82 ist als ein Elektronikanschluss ausgebildet. Insbesondere weist das Funktionsbauteil einen USB-Anschluss auf. Grundsätzlich ist es auch denkbar, dass der Elektronikanschluss einen weiteren Anschluss, wie beispielsweise einen Audio-Anschluss oder einen komplett anderen Anschluss aufweist. Das Funktionsbauteil 82 ist an dem ersten Anbindungsbereich 40 an dem Trägerelement 30 angebunden. Das Funktionsbauteil 82 ist durch die Montageöffnung 78 in dem Abdeckelement 76 und die Ausnehmung 56 in dem Hartschaumelement 48 von der Rückseite 20 der Rückenlehneneinheit 12 zu dem Trägerelement 30 geführt, an dem es befestigt ist. Das Funktionsbauteil 82 ist in die für das Einsatzbauteil 72, 74 vorgesehene Ausnehmung 56 des Hartschaumelements 48 eingesetzt. Das Funktionsbauteil 82 ist zumindest im Wesentlichen in der für das Einsatzbauteil 72, 74 vorgesehenen Ausnehmung 56 des Hartschaumelements 48 angeordnet. Ein Kabel 88 des als Elektronikanschluss ausgebildeten Funktionsbauteils 82 ist insbesondere durch den Durchführungsschlitz 46 des Anbindungsbereichs 40 auf eine Vorderseite des Trägerelements 30 geführt. Das Hartschaumelement 48 bildet vorzugsweise in dem Bereich des Durchführungsschlitzes 46 ein Kabelschutzelement 102 auf. Das Kabelschutzelement 102 ist insbesondere als eine Erhebung auf der Vorderseite 54 des Hartschaumelements 48 ausgebildet. Das als Erhebung ausgebildete Kabelschutzelement 102 erstreckt sich in den Durchführungsschlitz 46. Das als Erhebung ausgebildete Kabelschutzelement 102 ist insbesondere dazu vorgesehen einen Rand, insbesondere eine Kante des Durchführungsschlitzes 46 zu überdecken. Dadurch kann insbesondere ein möglicherweise scharfkantiger Randbereich des Durchführungsschlitztes 46 überdeckt werden, um zu verhindern, dass das Kabel 88 des Funktionsbauteils 82 beschädigt wird. Die Rückenlehneneinheit 12 weist ein zweites Funktionsbauteil 90 auf. Das zweite Funktionsbauteil 90 ist als ein Getränkehalter ausgebildet. Das als Getränkehalter ausgebildete Funktionsbauteil 90 ist in die für das Einsatzbauteil 72, 74 vorgesehene Ausnehmung 58 eingesetzt. Das Funktionsbauteil 90 ist als ein schwenkbarer Getränkehalter ausgebildet. Das Funktionsbauteil 90 ist durch die Montageöffnung 80 in dem Abdeckelement 76 und die Ausnehmung 58 in dem Hartschaumelement 48 von der Rückseite 20 der Rückenlehneneinheit 12 zu dem Trägerelement 30 geführt, an dem es befestigt ist. Das Funktionsbauteil 90 ist in die für das Einsatzbauteil 72, 74 vorgesehene Ausnehmung 56 des Hartschaumelements 48 eingesetzt. Das Funktionsbauteil 90 ist zumindest im Wesentlichen in der für das Einsatzbauteil 72, 74 vorgesehenen Ausnehmung 56 des Hartschaumelements 48 angeordnet. Das Funktionsbauteil 90 weist eine Grundplatte und ein damit schwenkbar verbundenes Halteelement für ein Getränkeelement, wie insbesondere einen Becher oder eine Dose auf. Das Funktionsbauteil 90 ist über den zweiten Anbindungsbereich 60 mit dem Trägerelement 30 verbunden. Das Funktionsbauteil 90 ist mit seiner Grundplatte mit den Befestigungselementen 62 des Anbindungsbereichs 60 fest verbunden. Das Funktionsbauteil 90 ist insbesondere über seine Grundplatte fest mit dem Anbindungsbereich 60 verbunden. Das Funktionsbauteil 90 ist in einem eingeklappten Zustand komplett in der Ausnehmung 58 des Hartschaumelements 48 angeordnet. Das Abdeckelement 76 weist im Bereich der Montageöffnung 80 eine Vertiefung auf, die sich in die Ausnehmung 58 erstreckt. Dadurch kann das als schwenkbarer Getränkehalter ausgebildete Funktionsbauteil 90 in einem eingeklappten Zustand in der Ausnehmung 58 angeordnet sein und nicht über die Rückseite 20 der Rückenlehneneinheit 12 hinausstehen. In einem ausgeklappten Zustand wird das als Getränkehalter ausgebildete Funktionsbauteil 90 teilweise aus der Ausnehmung 58 des Hartschaumelements 48 herausgeschwenkt.

Durch den modularen Aufbau der Sandwicheinheit 28 in dem Kopfbereich 26 der Rückenlehneneinheit 12 können unterschiedliche Konfigurationen der Rückenlehneneinheit 12, die insbesondere unterschiedliche Funktionsbauteile 82, 90 aufweisen besonders einfach bereitgestellt werden. Insbesondere kann eine Rückenlehneneinheit 12 bereitgestellt werden, die in dem Kopfbereich 26 besonders vorteilhafte Eigenschaften für einen Kopfaufprall in einem Crashfall aufweist, insbesondere auch unabhängig von einer Konfiguration. Es kann ein gleiches Hartschaumelement 48, sowie ein gleiches Trägerelement 30 für verschiedene Konfigurationen mit unterschiedlichen Funktionsbauteilen 82, 90 verwendet werden. Soll beispielsweise nur ein Funktionsbauteil 82, 90 an dem ersten Anbindungsbereich 40 an das Trägerelement 30 angebunden werden, so wird das Einsatzbauteil 72 aus der Ausnehmung 56 entfernt, oder kein Einsatzbauteil 72, 74 in die Ausnehmung 56 eingebracht und das entsprechende Funktionsbauteil 82, 90 in die Ausnehmung 56 eingesetzt, während in die Ausnehmung 58, in der kein Funktionsbauteil 82, 90 angeordnet werden soll, ein Einsatzbauteil 74 eingesetzt wird, oder entsprechend nicht aus der Ausnehmung 58 entfernt wird. In einem fertig montierten Zustand wäre insbesondere in der ersten Ausnehmung 56 des Hartschaumelements 48 ein Funktionsbauteil 82, 90 angeordnet und in der zweiten Ausnehmung 58 des Hartschaumelements 48 das entsprechende Einsatzbauteil 72, 74. Dadurch kann insbesondere auch in dem Anbindungsbereich 60, in dem kein Funktionsbauteil 82, 90 angeordnet ist, durch das Einsatzbauteil 72, 74 in der Ausnehmung 58 eine vorteilhafte Aufprallfläche geschaffen werden.

Vorzugsweise weist ein in dem Hartschaumelement 48 eingebautes Funktionsbauteil 82, 90 eine Steifigkeit auf, die sich von einem in dem Hartschaumelement 48 eingebauten Einsatzbauteil 72, 74 um maximal 2% unterscheidet. Dadurch weisen die unterschiedlichen Variationen der Rückenlehneneinheit 12 vorzugsweise immer gleiche Aufprallcharakteristiken auf, wodurch vorzugsweise Crashtests mit lediglich einer Konfiguration der Rückenlehneneinheit 12 zur Zulassung von Rückenlehneneinheiten 12 mit unterschiedlichen Konfigurationen ausreichend sind.

Grundsätzlich ist es auch denkbar, dass die Rückenlehneneinheit 12 keine in ihrem Kopfbereich 26 angeordneten Funktionsbauteile 82, 90 aufweist. Dabei wäre in beiden Ausnehmungen 56, 58 des Hartschaumelements 48 jeweils ein entsprechendes Einsatzbauteil 72, 74 angeordnet. Grundsätzlich wäre es auch denkbar, dass die Rückenlehneneinheit 12 in ihrem Kopfbereich 26 zumindest teilweise eine Literaturtasche 104 aufweist, die sich in einem Bereich zwischen dem Trägerelement 30 und dem Abdeckelement 76 in der Rückenlehneneinheit 12 erstreckt. Vorzugsweise ist es dabei insbesondere denkbar, dass die Literaturtasche 104 eine Öffnung 106 aufweist, die sich in einem oberen Randbereich des Kopfbereichs 26, insbesondere über möglichen Funktionsbauteilen 82, 90 befinden. Es wäre vorzugsweise insbesondere denkbar, dass eine Literaturtasche 104 zumindest teilweise von einem Hohlraum in dem Hartschaumelement 48 gebildet ist.

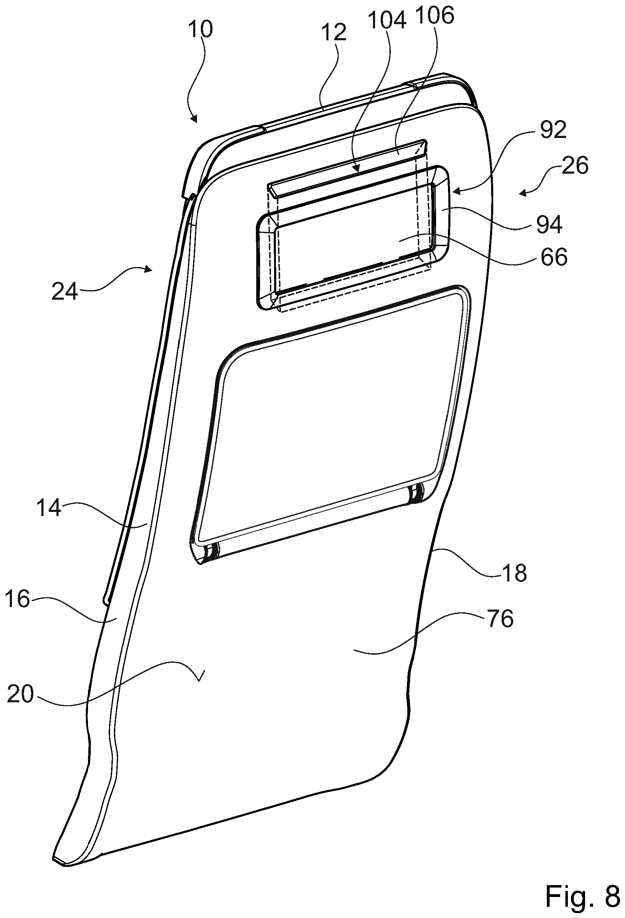

In der Figur 8 ist eine Rückenlehneneinheit 12 mit einem anderen Funktionsbauteil 92 gezeigt. Das Funktionsbauteil 92 ist insbesondere als eine Anzeigeeinheit ausgebildet, die dazu vorgesehen ist, Anzeigeelemente, wie insbesondere Flyer oder Werbedrucke an die Rückenlehneneinheit 12 anzubinden. Das Funktionsbauteil 92 weist einen Rahmen 94 auf, der eine Anzeigefläche umgibt. Das Funktionsbauteil 92 umfasst ein transparentes Abdeckelement 96, das insbesondere als eine Plexiglasscheibe oder ein transparentes Kunststoffelement ausgebildet ist. Das Abdeckelement 96 kann an dem Rahmen 94 befestigt werden und überdeckt die Anzeigefläche. Hinter dem Abdeckelement 96 kann ein dünnes Element, wie insbesondere ein Blatt Papier oder eine Folie angeordnet werden. Der Rahmen 94 des Funktionsbauteils 92 ist vorzugsweise über beide Anbindungsbereiche 40, 60 des Montagebereichs 38 mit dem Trägerelement 30 oder über das Abdeckelement 76 selbst an die Rückenlehneneinheit 12 angebunden. Grundsätzlich ist es auch denkbar, dass in dem Rahmen eine Bildschirmeinheit angeordnet ist. Vorzugsweise ist es insbesondere denkbar, dass in dem Rahmen 94 des Funktionsbauteils 92 insbesondere eine Displayfolie angeordnet ist. Ein Anschlusskabel der Displayfolie kann vorzugsweise insbesondere durch eine Montageöffnung in der in dem Abdeckelement 76, sowie einer entsprechenden Ausnehmung 54, 56 in dem Hartschaumelement 48 und den Durchführungsschlitz 46 in einem Anbindungsbereich 40, 60 geführt werden.

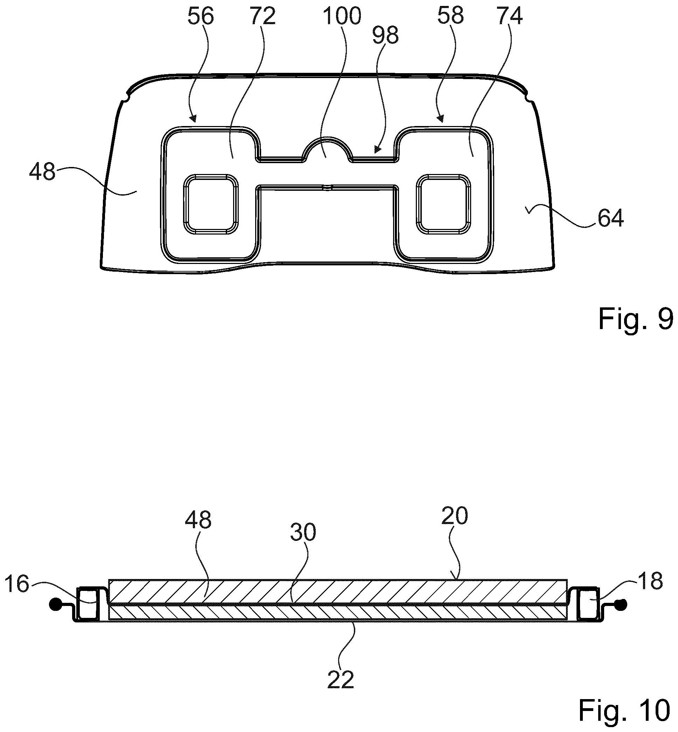

Figur 9 zeigt eine alternative Ausgestaltung des Hartschaumelements 48 und der darin eingebrachten Einsatzbauteile 72, 74. Die Ausnehmungen 56, 58 des Hartschaumelements 48 sind über einen Verbindungsbereich 98 miteinander verbunden. Der Verbindungsbereich 98 ist ebenfalls als eine Ausnehmung ausgebildet. Die Ausnehmungen 56, 58 und der Verbindungsbereich 98 ergeben zusammen eine zusammenhängende Ausnehmung. Die beiden Einsatzbauteile 72, 74 sind über einen Steg 100 miteinander einstückig verbunden. Der Steg 100 ist entsprechend des als Ausnehmung ausgebildeten Verbindungsbereichs 98 ausgebildet. Der Steg 100 kann in den Verbindungsbereich 98 in das Hartschaumelement 48 eingesetzt werden. Die beiden Einsatzbauteile 72, 74 bilden zusammen mit dem Steg 100 ein Bauteil aus, das zusammen in die Ausnehmungen 56, 58 und den Verbindungsbereich 98 eingesetzt werden kann. Soll ein Funktionsbauteil 82, 90 in eine der Ausnehmungen 56, 58 des Hartschaumelements 48 eingesetzt werden, so wird das eine entsprechende Einsatzbauteil 72, 74 von dem Steg 100 abgebrochen und lediglich das andere Einsatzbauteil 72, 74 mit dem Steg 100 in die entsprechende Ausnehmung 56, 58 und den Verbindungsbereich 98 eingesetzt.

In einer weiteren, in Figur 10 schematisch dargestellten Ausgestaltung wäre es ebenso denkbar, dass das Trägerelement 30 von einem biegeweichen Bauteil, insbesondere von einem Gewebe und/oder einer Folie, gebildet ist. Vorzugsweise ist das Hartschaumelement 48 insbesondere dazu vorgesehen, eine Stabilität der Sandwicheinheit 28 bereitzustellen. Das biegeweiche Trägerelement 30 ist vorzugsweise insbesondere zur Aufnahme von Zugkräften in einem Crashfall, insbesondere bei einer Verformung vorgesehen. Das biegeweiche Trägerelement 30 ist insbesondere als ein Einleger in dem Hartschaumelement 48 ausgebildet. Das Hartschaumelement 48 erstreckt sich beidseitig des Trägerelements 30. Das Hartschaumelement 48 umgibt das Trägerelement 30 zumindest im Wesentlichen. Lediglich Verbindungsbereiche 32, 43 des Trägerelements 30 ragen vorzugsweise seitlich aus dem Hartschaumelement 48 hinaus. Vorzugsweise ist das Trägerelement 30 als ein Gewebe aus Fasern, beispielsweise aus Kohlefasern, die zumindest in Seitenbereichen, insbesondere in den Verbindungsbereichen mit einem Hartz und Härter getränkt sind und dadurch insbesondere dort zumindest teilweise steif ausgebildet sind. In einem Mittelbereich in dem das Gewebe in dem Hartschaumelement 48 angeordnet ist, ist es denkbar, dass die Fasern insbesondere nicht in einen Hartz und Härter getränkt sind und dadurch dort insbesondere biegeschlaff ausgebildet sind. Grundsätzlich wäre es insbesondere auch denkbar, dass das Trägerelement 30 von einer Beschichtung des Hartschaumelements 48 gebildet ist. Vorzugsweise ist es dabei denkbar, dass ein vor dem Trägerelement 30 angeordneter Teilbereich des Hartschaumelements 48 bis unmittelbar vor die Bespannung 22 reicht und zumindest teilweise ein Polster für einen Kopfabstützbereich der Rückenlehneneinheit 12 ausbilden kann. Grundsätzlich wäre es insbesondere auch denkbar, dass die Rückenlehneneinheit 12 in dem Kopfbereich 26 auf der Rückseite 64 kein Abdeckelement 76 aufweist, sondern die Rückseite 20 der Rückenlehneneinheit 12 von einer Beschichtung des Hartschaumelements 48 gebildet ist.

Vorzugsweise ist es ebenso denkbar, dass die Rückenlehneneinheit 12 in dem Kopfbereich 26 keine Bespannung 22 aufweist. Es ist insbesondere denkbar, dass ein Kopfabstützbereich von dem sich nach vorne erstreckenden Teil des Hartschaumelements 48 gebildet ist. Vorzugsweise kann die Vorderseite des Hartschaumelements 48 eine Kopfstützenkontur ausbilden. Auf die Vorderseite der Hartschaumelements 48 könnte vorzugsweise insbesondere ein Weichschaumelement mit einem Bezug angeordnet werden um die Kopfabstützfläche auszubilden.

### Bezugszeichen

- 10: Flugzeugsitz
- 12: Rückenlehneneinheit
- 14: Rahmen
- 16: Seitenrahmenelement
- 18: Seitenrahmenelement
- 20: Rückseite
- 22: Bespannung
- 24: Vorderseite
- 26: Kopfbereich
- 28: Sandwicheinheit
- 30: Trägerelement
- 32: Verbindungsbereich
- 34: Verbindungsbereich
- 36: Mittelbereich
- 38: Montagebereich
- 40: Anbindungsbereich
- 42: Befestigungselement
- 44: Montagekontur
- 46: Durchführungsschlitz
- 48: Hartschaumelement
- 50: Montageöffnung
- 52: Formschlusselement
- 54: Vorderseite
- 56: Ausnehmung
- 58: Ausnehmung
- 60: Anbindungsbereich
- 62: Befestigungselement
- 64: Rückseite
- 66: Teilbereich
- 68: Plateau
- 70: Teilbereich
- 72: Einsatzbauteil
- 74: Einsatzbauteil
- 76: Abdeckelement
- 78: Montageöffnung
- 80: Montageöffnung
- 82: Funktionsbauteil
- 84: Tischausnehmung
- 86: Tischelement
- 88: Kabel
- 90: Funktionsbauteil
- 92: Funktionsbauteil
- 94: Rahmen
- 96: Abdeckelement
- 98: Verbindungsbereich
- 100: Steg
- 102: Kabelschutzelement
- 104: Literaturtasche
- 106: Öffnung

## Patentansprüche

1. Flugzeugsitzvorrichtung, mit einer Rückenlehneneinheit (12), die einen Kopfbereich (26) mit zumindest einer Sandwicheinheit (28) umfasst, die zumindest ein Trägerelement (30) und in Richtung einer Rückseite (20) der Rückenlehneneinheit (12) zumindest ein dem Trägerelement (30) nachgeordnetes Hartschaumelement (48) aufweist, das als ein Aufpralldämpfungselement ausgebildet ist, **dadurch gekennzeichnet, dass** die Rückenlehneneinheit (12) ein Funktionsbauteil (82, 90, 92) und/oder die Sandwicheinheit ein Einsatzbauteil (72, 74) umfasst, wobei das Hartschaumelement (48) zumindest eine Ausnehmung (56, 58) aufweist, wobei jede Ausnehmung (56, 58) dazu vorgesehen ist, ein solches Funktionsbauteil (82, 90, 92) oder ein solches Einsatzbauteil (56, 58) aufzunehmen.

2. Flugzeugsitzvorrichtung nach Anspruch 1, **dadurch gekennzeichnet, dass** das Trägerelement (30) dazu vorgesehen ist, in einem Aufprall Kräfte, insbesondere Zug- und/oder Biegekräfte aufzunehmen.

3. Flugzeugsitzvorrichtung nach Anspruch 1 oder 2, **dadurch gekennzeichnet, dass** das Trägerelement (30) von einem Plattenelement gebildet ist.

4. Flugzeugsitzvorrichtung nach einem der vorhergehenden Ansprüche, **dadurch gekennzeichnet, dass** das Trägerelement (30) von einem biegeweichen Bauteil, insbesondere von einem Gewebe und/oder einer Folie gebildet ist.

5. Flugzeugsitzvorrichtung nach einem der vorhergehenden Ansprüche, **dadurch gekennzeichnet, dass** das Trägerelement (30) von einer Beschichtung des Hartschaumelements (48) gebildet ist, die als eine auf eine Oberfläche des Hartschaumelements (48) aufgebrachte Schicht ausgebildet ist.

6. Flugzeugsitzvorrichtung nach einem der vorhergehenden Ansprüche, **dadurch gekennzeichnet, dass** das Trägerelement (30) in einer Sitzrichtung betrachtet zumindest teilweise konkav ausgebildet ist.

7. Flugzeugsitzvorrichtung nach einem der vorhergehenden Ansprüche, **dadurch gekennzeichnet, dass** das Einsatzbauteil (72, 74) zumindest teilweise mit dem Hartschaumelement (48) stoffschlüssig verbunden ist.

8. Flugzeugsitzvorrichtung nach einem der vorhergehenden Ansprüche, **dadurch gekennzeichnet, dass** das Hartschaumelement (48) mehrteilig ausgebildet ist.

9. Flugzeugsitzvorrichtung nach einem der vorhergehenden Ansprüche, **gekennzeichnet durch** zumindest ein Abdeckelement (76), dass das Hartschaumelement (48) auf der Rückseite der Rückenlehneneinheit (12) zumindest teilweise abdeckt.

## Claims

1. Aircraft seat device,
with a backrest unit (12) comprising a head region (26) with at least one sandwich unit (28) which has at least one support element (30) and has towards a rear side (20) of the backrest unit (12) at least one rigid-foam element (48) that is arranged downstream of the carrier element (30) and is realised as an impact damping element,
**characterised in that** the backrest unit (12) comprises a functional component (82, 90, 92) and/or the sandwich unit comprises an insert component (72, 74), wherein the rigid-foam element (48) has at least one recess (56, 58), wherein each recess (56, 58) is configured for receiving such a functional component (82, 90, 92) or such an insert component (56, 58).

2. Aircraft seat device according to claim 1,
**characterised in that** the carrier element (30) is configured for receiving forces, in particular tensile and/or bending forces, in an impact.

3. Aircraft seat device according to claim 1 or 2,
**characterised in that** the carrier element (30) is realised by a plate element.

4. Aircraft seat device according to one of the preceding claims,
**characterised in that** the carrier element (30) is realised by a flexurally soft component, in particular a fabric and/or a film.

5. Aircraft seat device according to one of the preceding claims,
**characterised in that** the carrier element (30) is embodied as a coating of the rigid-foam element (48), which is realised as a layer applied on a surface of the rigid-foam element (48).

6. Aircraft seat device according to one of the preceding claims,
**characterised in that** viewed in a sitting direction, the carrier element (30) is realised at least partially concave.

7. Aircraft seat device according to one of the preceding claims,
**characterised in that** the insert component (72, 74) is at least partially connected with the rigid-foam element (48) by substance-to-substance bond.

8. Aircraft seat device according to one of the preceding claims,
**characterised in that** the rigid-foam element (48) is realised in a multi-part implementation.

9. Aircraft seat device according to one of the preceding claims,
**characterised by** at least one cover element (76), which at least partially covers the rigid-foam element (48) on the rear side of the backrest unit (12).

## Revendications

1. Dispositif de siège d'avion,
avec une unité-dossier (12) incluant une zone de tête (26) ayant au moins une unité-sandwich (28) qui comporte au moins un élément de support (30) et comporte vers une face arrière (20) de l'unité de dossier (12) au moins un élément de mousse rigide (48) disposé en aval de l'élément de support (30) et réalisé comme élément d'amortissement de choc,
**caractérisé en ce que** l'unité-dossier (12) comprend un composant fonctionnel (82, 90, 92) et/ou l'unité-sandwich comprend un composant d'insertion (72, 74), où l'élément de mousse rigide (48) comporte au moins une échancrure (56, 58), où chaque échancrure (56, 58) est prévue pour recevoir un tel composant fonctionnel (82, 90, 92) ou un tel composant d'insertion (56, 58).

2. Dispositif de siège d'avion selon la revendication 1,
**caractérisé en ce que** l'élément de support (30) est prévu pour recevoir en choc des forces, en particulier des forces de traction et/ou de pliage.

3. Dispositif de siège d'avion selon la revendication 1 ou 2,
**caractérisé en ce que** l'élément de support (30) est réalisé par un élément-plaque.

4. Dispositif de siège d'avion selon l'une des revendications précédentes,
**caractérisé en ce que** l'élément de support (30) est réalisé par un composant souple en pliage, en particulier par un tissu et/ou un film.

5. Dispositif de siège d'avion selon l'une des revendications précédentes,
**caractérisé en ce que** l'élément de support (30) est réalisé par un revêtement de l'élément de mousse rigide (48) qui est réalisé comme couche appliquée sur une surface de l'élément de mousse rigide (48).

6. Dispositif de siège d'avion selon l'une des revendications précédentes,
**caractérisé en ce que** vu en direction d'assise, l'élément de support (30) est réalisé au moins partiellement concave.

7. Dispositif de siège d'avion selon l'une des revendications précédentes,
**caractérisé en ce que** le composant d'insertion (72, 74) est au moins partiellement relié avec l'élément de mousse rigide (48) par liaison matérielle.

8. Dispositif de siège d'avion selon l'une des revendications précédentes,
**caractérisé en ce que** l'élément de mousse rigide (48) est réalisé en plusieurs parties.

9. Dispositif de siège d'avion selon l'une des revendications précédentes,
**caractérisé par** au moins un élément de couverture (76) au moins partiellement couvrant l'élément de mousse rigide (48) sur la face arrière de l'unité-dossier (12).
